# EUROPEAN PATENT APPLICATION

(11) **EP 3 354 171 A1**
(43) Date of publication of application: **01.08.2018**
(21) Application number: 16848071.3
(22) Date of filing: 19.09.2016
(51) Int. Cl.: A47J 19/02

(54) **JUICER**

(30) Priority: 21.09.2015 CN 201520734473 U
(71) Applicant: Shanghai Geant Industrial Co., Ltd, Shanghai 201609 (CN)
(72) Inventor: ZHOU, Qi, Shanghai 201609 (CN)
(74) Representative: Gevers Patents
(86) International application number: PCT/CN2016/099280
(87) International publication number: WO 2017/050190

(57) **Abstract**

The present invention discloses a juicer, including a juicer conveying device, a juicer juice-out control device, a juicer automatic cupping device, a juicer juicing device, and an anti-pinch door sheet. The juicer conveying device conveys a material to the juicer juicing device. The juicer juicing device juices the material, and then juice enters the juicer juice-out control device. The juicer juice-out control device controls the outflow volume of the juice. The controlled juice enters the juicer automatic cupping device. The juicer automatic cupping device automatically cups the juice. After cupping, a cup can be taken away through the anti-pinch door sheet.

## Description

### BACKGROUND

### Technical Field

The present invention relates to a juicing machine, and in particular, to a juicing machine having functions of automatic conveying, juice-out control and automatic cupping.

### Related Art

Juicing, serving as a conventional technology, has been in existence for a long time. Researches on modern medicine and nutrition show that rich nutritional ingredients in fruits are necessary to a human body. Fruit juice also has functions of enhancing immunity, reducing diseases and delaying senescence. The fruit juice not only is nutrient-rich, but also contains relatively low calories, thereby more catering to the pursuit of modern people for a pretty figure. Due to the improvement of requirements for the quality of life, existing juicing machines cannot meet actual demands yet.

Although bottled or canned fruit juice produced by big modern machines can be preserved for a long time, it is inevitably necessary to add other raw materials, and a rot prevention technology is used to prolong the shelf life, and as a result, the degree of freshness cannot be guaranteed. Moreover, because of food safety affairs frequently breaking out in recent years, the confidence of consumers for this kind of products has been reduced to a low point.

Although a small-sized domestic juicer can ensure the freshness of a food material, the juice yield is low, it wastes time and energy to clean the juicer, and the juicer is only suitable for families with a small number of members.

It is precisely because of the defects of the foregoing juicer, service of juicing fresh fruits emerges in the streets of many cities. However, this service is supplied by floating street vendors, and an original squeezing machine is adopted to squeeze fruit juice manually. As a result, the efficiency is low, safety and sanitation cannot be guaranteed, and the environment is affected by produced fruit residues.

### SUMMARY

The present invention discloses a juicer, including a juicer conveying device, a juicer juice-out control device, a juicer automatic cupping device, a juicer juicing device, and an anti-pinch door sheet.

The juicer conveying device conveys a material to the juicer juicing device. The juicer juicing device juices the material, and then juice enters the juicer juice-out control device. The juicer juice-out control device controls the outflow volume of the juice. The controlled juice enters the juicer automatic cupping device. The juicer automatic cupping device automatically cups the juice. After cupping, a cup can be taken away through the anti-pinch door sheet.
A. The juicer conveying device includes a conveying basket and a conveying chain, wherein the conveying basket is connected to the conveying chain, and a motor drives a transmission gear, so as to drive the conveying chain to rotate.
   The conveying device further includes a lower tray, a transmission belt being arranged on a bottom surface of the lower tray.
   The conveying device further includes an upper tray, the upper tray is higher than the lower tray, the upper tray includes a bottom surface and a fence connected to the bottom surface, a transmission belt is also arranged on the bottom surface of the upper tray, the fence is provided with an opening, and a receiving groove is provided on one side of the lower tray.
B. The juicer juice-out control device includes a funnel, a juice storage tube, a connecting piece, and a guide tube. The guide tube is connected to the bottom of the funnel. One end of the juice storage tube is closed, and the other end is provided with an opening. The upper part of the middle of the juice storage tube is additionally provided with an opening. The bottom of the guide tube is located in the opening at the upper part of the middle of the juice storage tube. The bottom of the guide tube is provided with two protruding portions. The connecting piece tightly circles around the bottom of the juice storage tube. Both ends are separately provided with an opening sleeving the corresponding protruding portion at the bottom of the guide tube. The connecting piece can rotate around the two protruding portions. The juice-out control device further includes a single-point liquid probe, wherein the single-point liquid probe is fixed to a transmission rod, the transmission rod is connected to the upper part of the opening end of the juice storage tube, the transmission rod is connected to a motor, and the motor moves to be capable of driving the transmission rod to move up and down and driving the juice storage tube to rotate around the protruding portions at the bottom of the guide tube. The juicer further includes a controller.
   The single-point probe is connected to the controller. When the liquid probe probes liquid, an uplift signal is sent to the controller, and the controller controls the transmission rod to move up, so as to drive the end, with the opening, of the juice storage tube to be uplifted to be higher than the closed end.
C. The juicer automatic cupping device includes a base plate, a cup discharging device, a cover discharging device, and a cover pressing device. The cup discharging device, the cover discharging device and the cover pressing device are higher than the base plate, the base plate is connected to a motor, and the motor rotates to be capable of driving the base plate to rotate around the center of circle.
   A cup aligning device is arranged on the base plate, the bottom diameter of the aligning device being greater than the cup bottom diameter of a to-be-filled cup.
   The cup discharging device includes a housing, wherein an inner wall of the housing is provided with more than two cup holding protruding portions, and a vertical distance between the cup holding protruding portions and the base plate is greater than the height of the to-be-filled cup.
   The cover discharging device includes a housing, wherein an inner wall of the housing is provided with more than two cover holding protruding portions, and a vertical distance between the cover holding protruding portions and the base plate is greater than the height of the to-be-filled cup.
   The cover pressing device includes a cover pressing plate, a rack, and a motor with a gear. The rack is meshed with the gear of the motor. The rack drives the cover pressing plate to move up and down.
   When the base plate rotates, the cup aligning device can be located right below the cup discharging device, the cover discharging device and the cover pressing device.
D. The anti-pinch door sheet includes a door sheet body and a goods outlet, wherein an upper baffle is arranged above the goods outlet, and a lower baffle is arranged below the goods outlet. The door sheet further includes a motor, wherein the motor drives, through the transmission rod, the lower baffle to longitudinally move, and the upper baffle is connected to the door sheet body through an elastic device.

The top end of the goods outlet is laterally provided with two limiting devices. A photoelectric device is connected to the motor, and can make the motor stop running.

The inner wall of the housing of the cup discharging device of the automatic cupping device is provided with a gear, each cup holding protruding portion is a shaft with a gear, the upper and lower parts of each shaft are provided with a spiral groove separately, and the two spiral grooves are intersected to form a gap.

The inner wall of the housing of the cover discharging device of the automatic cupping device is provided with a gear, each cover holding protruding portion is a shaft with a gear, the upper and lower parts of each shaft are provided with a spiral groove separately, and the two spiral grooves are intersected to form a gap.

The automatic cupping device is connected to the controller, after receiving a cup falling signal, the controller controls the base plate to rotate, the cup aligning device rotates to be under the cup discharging device, the shafts with the gears rotate, a cup edge of the to-be-filled cup rotationally falls to the gap along the spiral grooves, and the to-be-filled cup falls into the cup aligning device.

The automatic cupping device is connected to the controller, after receiving a cover falling signal, the controller controls the base plate to rotate, the cup aligning device rotates to be under the cover discharging device, the shafts with the gears rotates, a cover edge of a to-be-filled cup cover rotationally falls to the gap along the spiral grooves, and the to-be-filled cup cover falls onto the to-be-filled cup.

The automatic cupping device is provided with a photoelectric sensor, and after receiving the cup falling signal, the controller controls the photoelectric sensor to send a detection signal to confirm whether a cup falls.

The automatic cupping device is provided with a photoelectric sensor, and after receiving the cover falling signal, the controller controls the photoelectric sensor to send a detection signal to confirm whether a cup cover falls.

The juicer conveying device includes a controller and a photoelectric sensor, after the controller receives a material conveying signal, the motor is started, the motor drives the transmission belts of the upper tray and the lower tray, the material enters the lower tray from the opening of the fence of the upper tray, the photoelectric sensor sends a signal to the controller, and the transmission belt of the upper tray stops moving. The material enters the receiving groove from the lower tray, after the material enters the receiving groove, the photoelectric sensor sends a signal to the controller, and the transmission belt of the lower tray stops moving.

A photoelectric sensor is mounted in the upper tray, the photoelectric sensor scans the upper tray periodically, if the photoelectric sensor cannot scan the material, the photoelectric sensor sends a signal to the controller, after the controller receives the signal of the photoelectric sensor, the conveying basket is driven to the top end of the conveying device by the chain, the top end of the juicer conveying device is provided with a blocking component, one side of the conveying basket is blocked, the conveying basket is rotated and overturned, and the material in the conveying basket enters the upper tray.

A photoelectric sensor and a limiter are arranged on a machine frame of the conveying device, and when scanning the conveying basket to find out that there is no material, the photoelectric sensor transmits a signal to the controller through the limiter.

The juicer juice-out control device is connected to the controller, the controller can receive a lowering signal, and the controller controls the transmission rod to move down, so as to drive the end, with the opening, of the juice storage tube to be lowered to be lower than the closed end.

There are two single-point liquid probes of the juicer juice-out control device, which are located in the same vertical height, and when the two single-point probes are immersed into liquid at the same time, a closed loop is formed.

Compared with the prior art, the present invention resolves the problem that a consumer cannot confirm a food material on the spot during traditional juicing mechanization production, ensures sufficient raw materials, and can automatically convey the food material.

Moreover, the present invention resolves the problem that the environmental sanitation of a traditional street juicing machine cannot be ensured, achieves complete automation from juice out to covering, and eliminates a manual intervention process.

Besides, compared with the prior art, the present invention resolves the problem that the traditional street juicing machine cannot achieve quantification, the capacities of all cups are identical, and standardization is achieved.

### BRIEF DESCRIPTION OF THE DRAWINGS

FIG. 1 is an overall schematic diagram of an automatic cupping device.
FIG. 2 is a diagram of a position relationship between a cover pressing device and a base plate.
FIG. 3 is a schematic diagram of a cover pressing device.
FIG. 4 is a schematic diagram of a base plate and an aligning device.

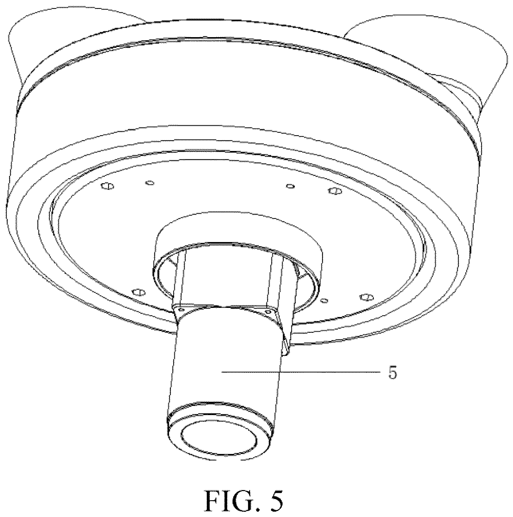

FIG. 5 is a schematic diagram of a bottom surface of a base plate.
FIG. 6 and FIG. 8 are schematic diagrams of a cup discharging device respectively.
FIG. 7 and FIG. 9 are schematic diagrams of a cup discharging device respectively.
FIG. 10 is a schematic diagram of a shaft device with a gear.
FIG. 11 is an overall schematic diagram from one side of a cup discharging device.
FIG. 12 is an overall schematic diagram from one side of a cover discharging device.
FIG. 13 is a schematic diagram of a shaft device with a gear from the perspective of the bottom.
FIG. 14 is a schematic diagram of a cup discharging device filled with a cup.
FIG. 15 is a schematic diagram of a conveying device.
FIG. 16 is an assembly mode of a conveying basket, a gear and a chain.
FIG. 17 is a schematic diagram from the perspective of the bottom.
FIG. 18 is a schematic diagram of a conveying basket overturned after being blocked by a blocking component.
FIG. 19 is a schematic diagram of a motor driving a chain to rotate.
FIG. 20 is a local schematic diagram of a photoelectric element and a limiting switch for controlling a conveying basket.
FIG. 21 is a local schematic diagram of an upper tray, a lower tray and a receiving groove.
FIG. 22 is a local schematic diagram after housings of an upper tray and a lower tray and baffles are removed.
FIG. 23 is a schematic diagram of a juice-out control device.
FIG. 24 is a schematic diagram of connection among a juice storage tube, a guide tube and a transmission rod. FIG. 25 is a running schematic diagram of a juice-out control device.
FIG. 26 is an overall machine schematic diagram.

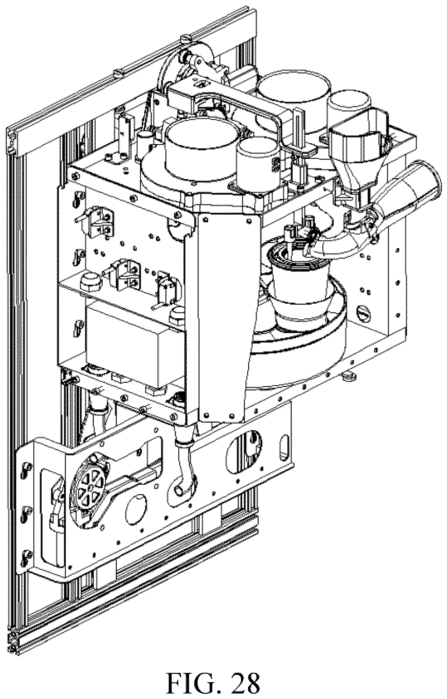

FIG. 27 and FIG. 28 are combination schematic diagrams of a juicer juice-out control device, a juicer automatic cupping device and an anti-pinch door sheet.
FIG. 29 is a front schematic diagram of a door sheet of a vending machine.
FIG. 30 is a back schematic diagram of a door sheet of a vending machine (a lower baffle is not uplifted).
FIG. 31 is a back schematic diagram of a door sheet of a vending machine (a lower baffle is already uplifted).

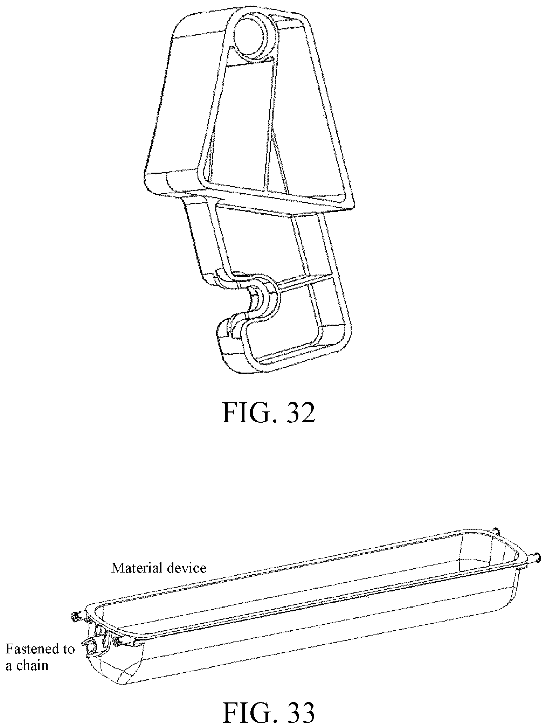

FIG. 32 is a structure schematic diagram of a blocking component.

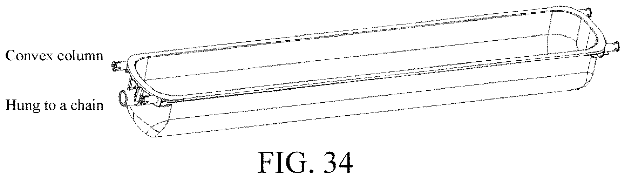

FIG. 33 and FIG. 34 are two implementation manners of a connecting structure of a conveying basket.

### Description of drawing marks

1-Base plate
2-Cup discharging device
3-Cover discharging device
4-Cover pressing device
5-Motor
6-Cup aligning device
7-Cover pressing plate 8-Rack
9-Motor with gear
10-Housing of cup discharging device
11-Cup holding protruding portion
12-Housing of cup sealing device
13-Cover holding protruding portion
14-Gear
15-Shaft 1 with gear (cup discharging device)
16-Gear
17-Shaft 2 with gear (cover discharging device)
18-Photoelectric sensor
19-Photoelectric sensor
20-Transmission gear
21-Motor
22-Transmission gear
23-Motor
24-Limiting switch
201-Conveying basket
202-Conveying chain
203-Upper tray
204-Lower tray
205-Receiving groove
206-Fence
207-Upper tray transmission belt wheel
208-Lower tray transmission belt wheel
209-Blocking component
210-Limiting switch
211-Photoelectric element
301-Funnel
302-Juice storage tube
303-Connecting piece
304-Opening at one end of juice storage tube
305-Opening at upper part of middle of juice storage tube
306-Protruding portion
307-Liquid probe
308-Transmission rod
309-Guide tube
310-Cup

### DETAILED DESCRIPTION

The detailed description is made hereinbelow with orange juicing as an example in conjunction with the drawings.

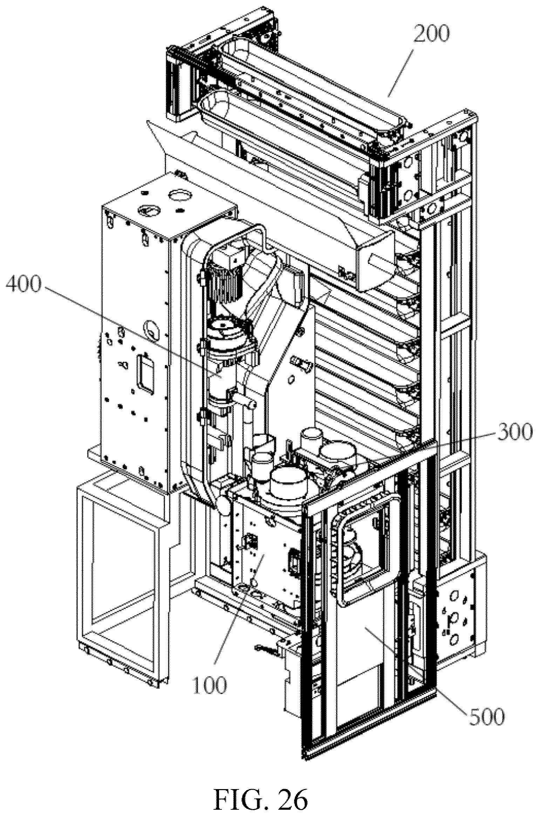

A juicer shown in FIG. 26 includes a juicer conveying device (200), a juicer juice-out control device (300), a juicer automatic cupping device (100), and a juicer juicing device (400). The juicer conveying device (200) conveys a material to the juicer juicing device (400). The juicer juicing device (400) has many manners, such as a manner of squeezing by a plurality of metal claws up and down mutually to press out orange juice, after juicing, the juice enters the juicer juice-out control device (300), the juicer juice-out control device (300) controls the outflow volume of the juice, the controlled juice enters the juicer automatic cupping device (100), and the juicer automatic cupping device (100) automatically cups the juice.

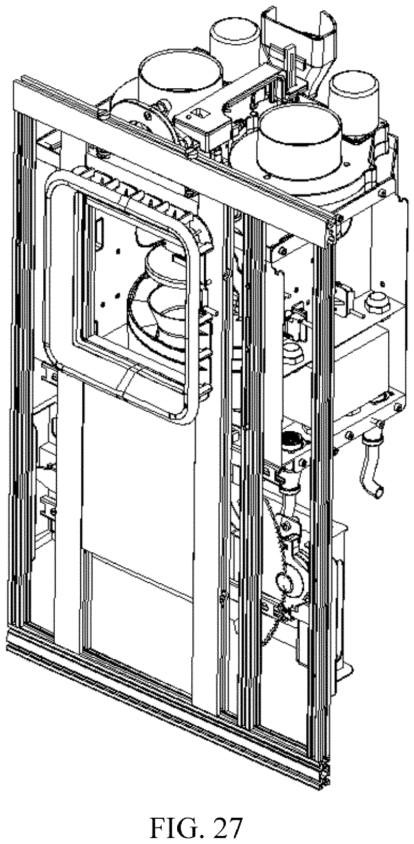

FIG. 27 can clearly show a relative position relationship between the juicer juice-out control device (300) and the juicer automatic cupping device (100) from the perspective opposite to FIG. 26.

The juicer in the present patent includes a controller. During specific implementation, the controller may be a single-chip computer, the single-chip computer being connected to the juicer conveying device (200), the juicer juice-out control device (300) and the juicer automatic cupping device (100). More accurately, the controller is connected to a photoelectric sensor, a limiting switch and a motor in each of the foregoing devices separately.

The juicer conveying device (200), the juicer juice-out control device (300) and the juicer automatic cupping device (100) are described hereinbelow respectively.

### Juicer conveying device

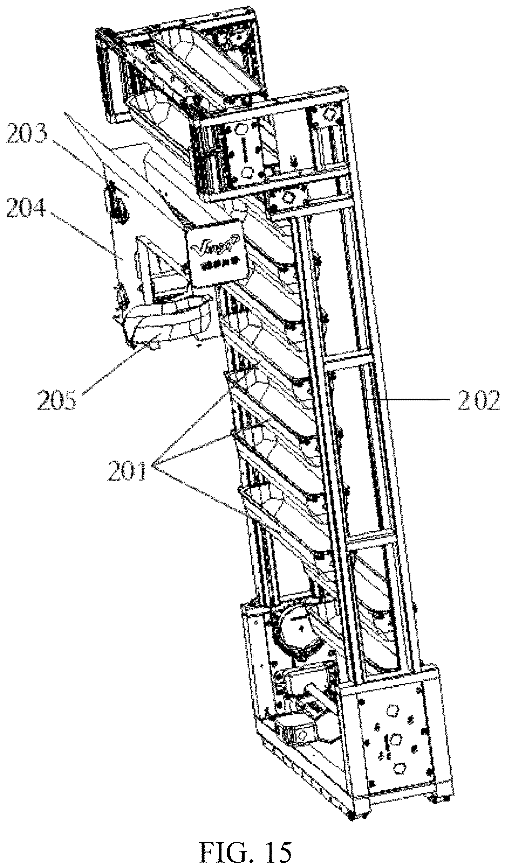

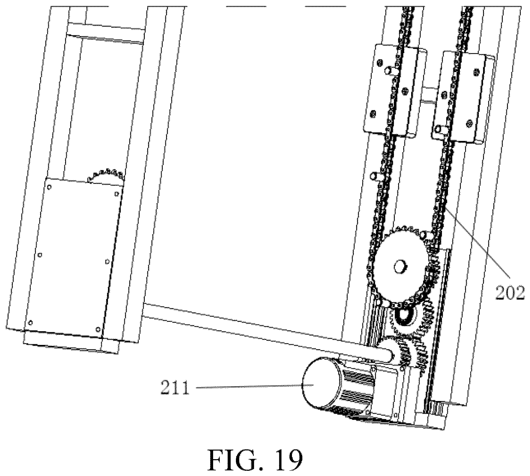

As shown in FIG. 15 to FIG. 22, the juicer conveying device (200) includes: a conveying basket (201), the conveying basket being full of oranges; and a conveying chain (202), the conveying basket being connected to the conveying chain. A motor (211) drives a transmission gear, so as to drive the chain to rotate. The conveying device further includes a lower tray (204), a transmission belt (208) being arranged on a bottom surface of the lower tray.

The conveying device further includes an upper tray (203), the upper tray is higher than the lower tray, the upper tray includes a bottom surface and a fence (206) connected to the bottom surface, a transmission belt (207) is arranged on the bottom surface of the upper tray, the fence is provided with an opening, and a receiving groove (205) is provided on one side of the lower tray.

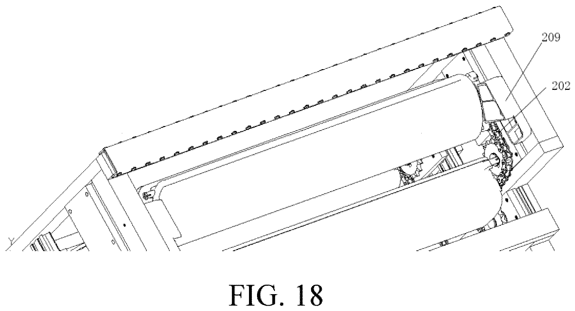

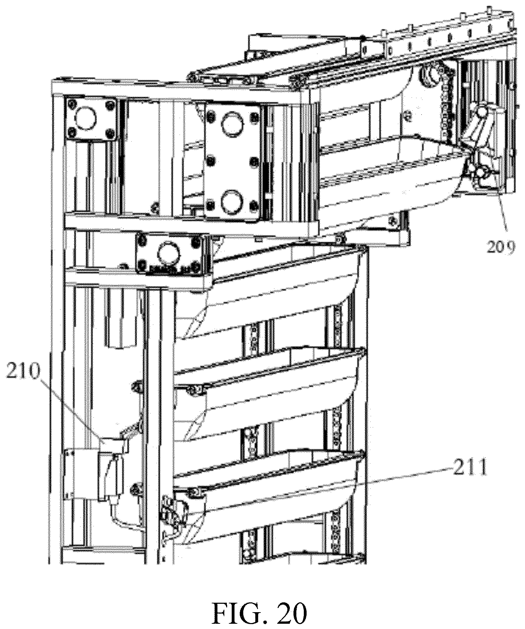

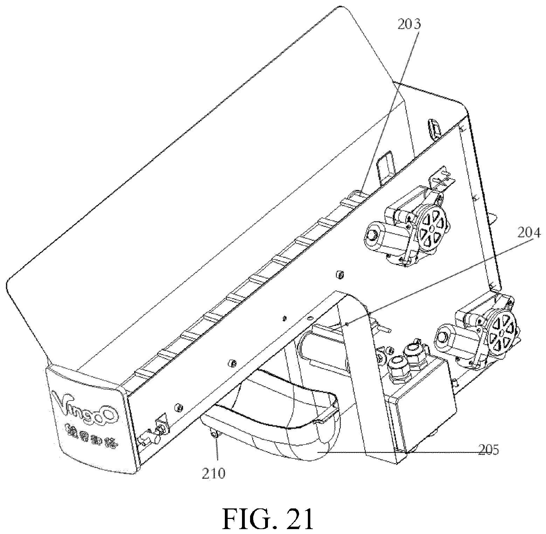

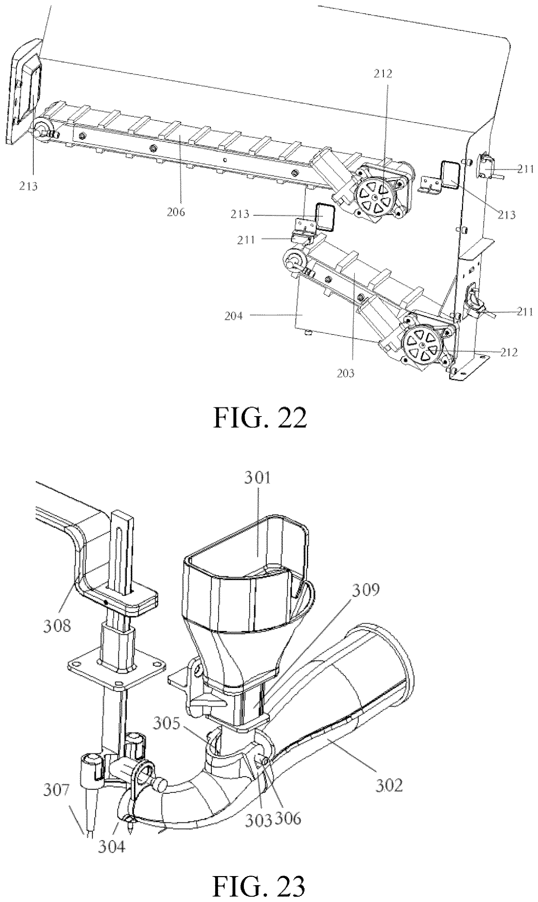

As shown in FIG. 21 and FIG. 22, the juicer conveying device is connected to a controller, wherein the controller may be a single-chip computer, and is connected to the motor, the photoelectric sensor, the limiting switch, and the like. A photoelectric sensor (211) is mounted in the upper tray, the photoelectric sensor (211) scans the upper tray periodically, and if the photoelectric sensor cannot scan the material, the photoelectric sensor sends a signal to the controller. Thereafter, as shown in FIG. 18 and FIG. 20, after the controller receives the signal of the photoelectric sensor (211), the conveying basket is driven to the top end of the conveying device by the chain, and the top end of the juicer conveying device is provided with a blocking component (209). When there is a plurality of conveying baskets, one side of the conveying basket closest to the top end is blocked, the conveying basket is rotated and overturned, and a material in the conveying basket enters the upper tray. Thereafter, because the conveying basket is empty, loses weight and restores balance, the chain drives the empty conveying basket to move to a next position, and another conveying basket filled with a material is conveyed to a position closest to the top end.

As shown in FIG. 22, after the controller receives a material conveying signal, a motor is started, and the motor drives the transmission belts of the upper tray and the lower tray. During specific implementation, the material conveying signal can be controlled by the controller and a limiting switch (210). For example, after the controller receives a signal indicative of that a user already inserts a coin, and when the limiting switch (210) cannot sense the weight of the material, the material conveying signal is sent to the controller, the controller controls the motor to run, so as to drive the transmission belts, the material enters the lower tray from the opening of the fence of the upper tray, and enters the receiving groove from the lower tray, and after the limiting switch (210) senses the weight of the material, the transmission belts stop moving.

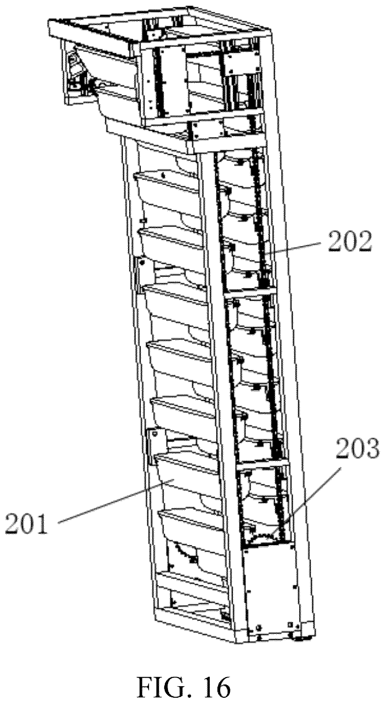

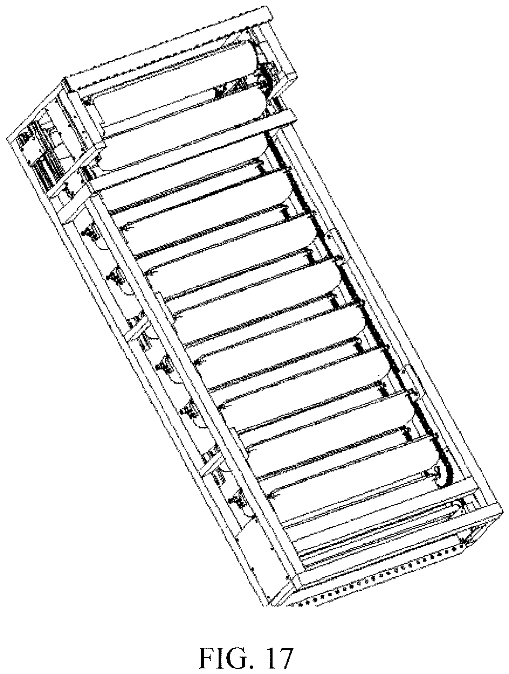

As shown in FIG. 16 and FIG. 17, there is a plurality of conveying baskets, which are distributed on a conveying route of the whole conveying chain, the conveying chain forming a closed route.

There are two conveying chains, and the two conveying chains move synchronously, both ends of the conveying basket being fixed with one of the chains separately.

From the perspective of specific implementation, the conveying device may adopt two chains forming a closed loop, the chains are suspended on a support, and are connected to a transmission motor, and the conveying baskets are distributed along the chains.

### Juicer juice-out control device

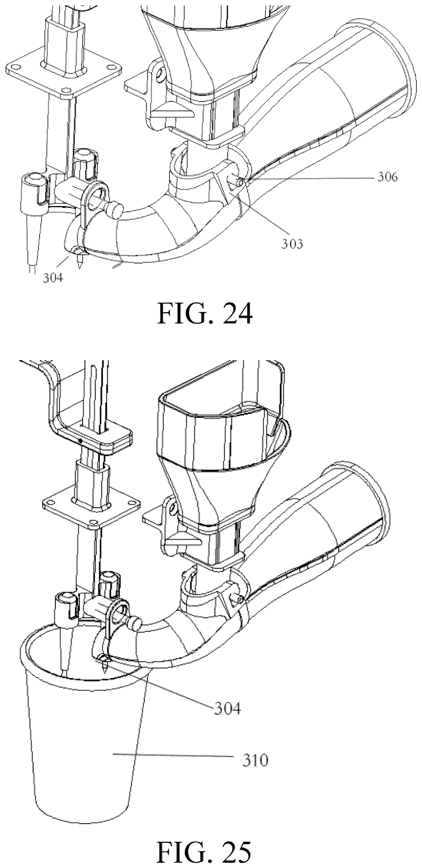

As shown in FIG. 23 to FIG. 25, the juicer juice-out control device includes a funnel (301), a juice storage tube (302), a connecting piece (303), and a guide tube (309). The guide tube (309) is connected to the bottom of the funnel (301). One end of the juice storage tube is closed, and the other end is provided with an opening (304). The upper part of the middle of the juice storage tube is additionally provided with an opening (305). The bottom of the guide tube (309) is located in the opening at the upper part of the middle of the juice storage tube. The bottom of the guide tube (309) is provided with two protruding portions (306). The connecting piece tightly circles around the bottom of the juice storage tube. Both ends are separately provided with an opening sleeving the corresponding protruding portion at the bottom of the guide tube (309). The connecting piece can rotate around the two protruding portions. The juice-out control device further includes a liquid probe (307), wherein the liquid probe is fixed to a transmission rod (308), the transmission rod is connected to the upper part of the opening end of the juice storage tube, the transmission rod is connected to a motor, and the motor is capable of driving the transmission rod to move up and down and driving the juice storage tube to rotate around the protruding portions at the bottom of the guide tube (309). The liquid probe is connected to a controller.

When the juice-out control device does not operate, one end, with the opening (304), of the juice storage tube (302) is higher than the other end. When the juice-out control device starts to operate actually, the motor moves to drive the transmission rod (308) to move down and to drive the juice storage tube to rotate around the protruding portions at the bottom of the guide tube (309), one end, with the opening (304), of the juice storage tube (302) is lower than the other end, one end, with the opening (304), of the juice storage tube (302) is close to the liquid probe (307), and a cup (310) is located below one end, with the opening (304), of the juice storage tube (302) and the liquid probe (307).

After oranges are squeezed, orange juice is guided into the funnel. Due to different sizes of the oranges, orange juice yields are different, and the quantity of oranges filling up a cup cannot be accurately calculated. For example, if orange juice does not fill up the cup after two oranges are squeezed, orange juice obtained by squeezing the third orange continuously flows out of the juice storage tube (302) and rises up to be in contact with the tip of the liquid probe (307), when the orange juice is probed by the liquid probe, the probe gives an uplift signal to the controller, the controller controls the transmission rod to move up, so as to drive the end, with the opening, of the juice storage tube to be uplifted to be higher than the closed end, and the orange juice will not flow out of the end, with the opening, of the juice storage tube any longer.

There are two liquid probes, which are located in the same vertical height, and when the two probes are immersed into liquid at the same time, a closed loop is formed.

### Juicer automatic cupping device

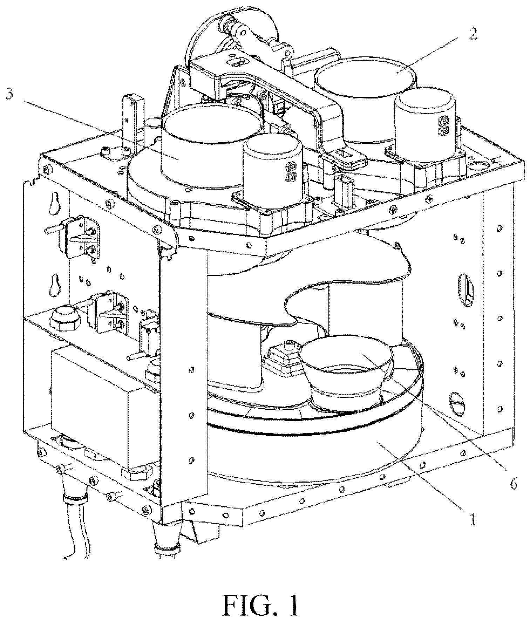

As shown in FIG. 1, the juicer automatic cupping device (100) includes a base plate (1), a cup discharging device (2), a cover discharging device (3), and a cover pressing device (4). The cup discharging device (2), the cover discharging device (3) and the cover pressing device (4) are higher than the base plate, the base plate (1) is connected to a motor (5), and the motor (5) rotates to be capable of driving the base plate (1) to rotate around the center of circle.

A cup aligning device (6) is arranged on the base plate (1), the bottom diameter of the aligning device (6) being greater than the cup bottom diameter of a to-be-filled cup.

The cup discharging device (2) includes a housing (10), wherein an inner wall of the housing (10) is provided with more than two cup holding protruding portions (11), and a vertical distance between the cup holding protruding portions (11) and the base plate (1) is greater than the height of the to-be-filled cup. The cup holding protruding portions have a function of holding, when cups do not fall, the cups and making the cups fall one by one through the cup holding protruding portions as needed.

The cover discharging device (3) includes a housing (12), wherein an inner wall of the housing (12) is provided with more than two cover holding protruding portions (13), and a vertical distance between the cover holding protruding portions (13) and the base plate (1) is greater than the height of the to-be-filled cup. The cover holding protruding portions have a function of holding, when cup covers do not fall, the cup covers and making the cups fall one by one through the cover holding protruding portions as needed.

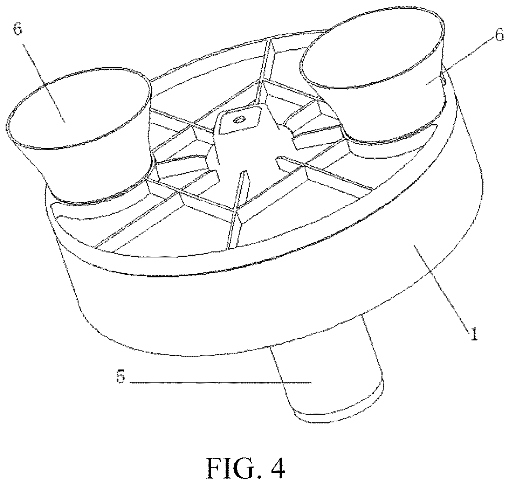

As shown in FIG. 4, plate reinforced members can be arranged on the base plate (1) for reinforcement.

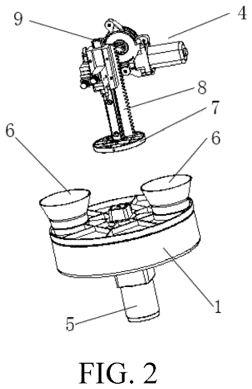

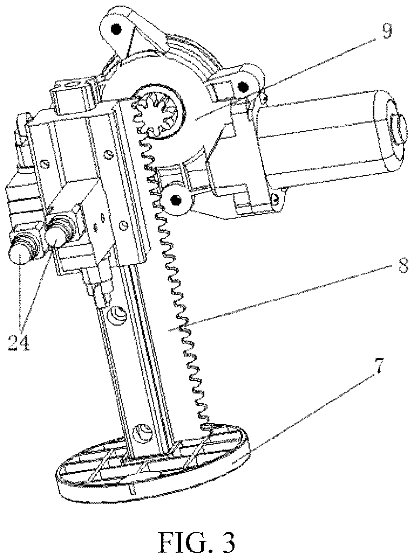

As shown in FIG. 2 and FIG. 3, the cover pressing device includes a cover pressing plate (7), a rack (8), and a motor (9) with a gear. The rack (8) is meshed with the gear of the motor (9). The rack (8) drives the cover pressing plate (7) to move up and down.

When the base plate rotates, the cup aligning device (6) can be located right below the cup discharging device (2), the cover discharging device (3) and the cover pressing device (4).

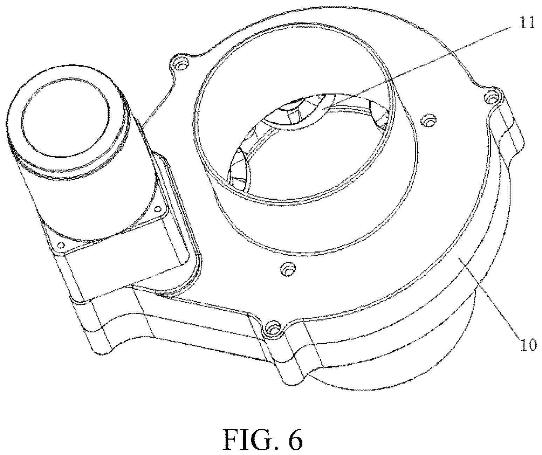

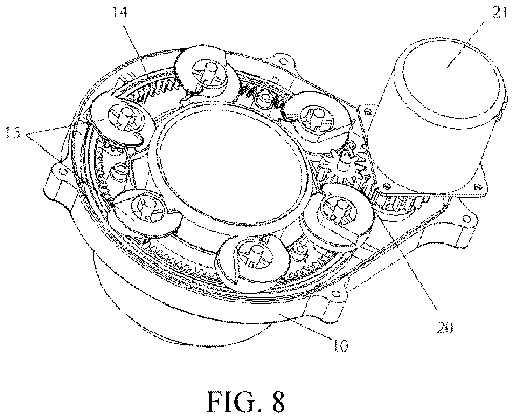

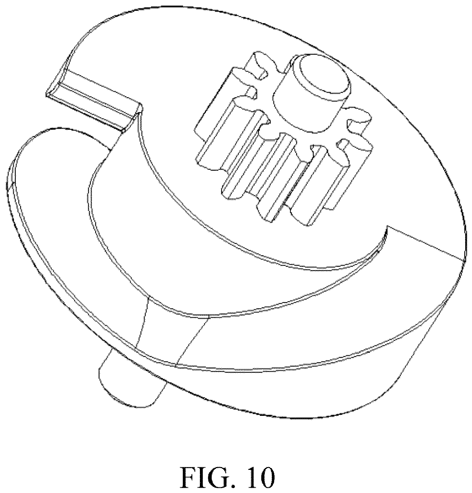

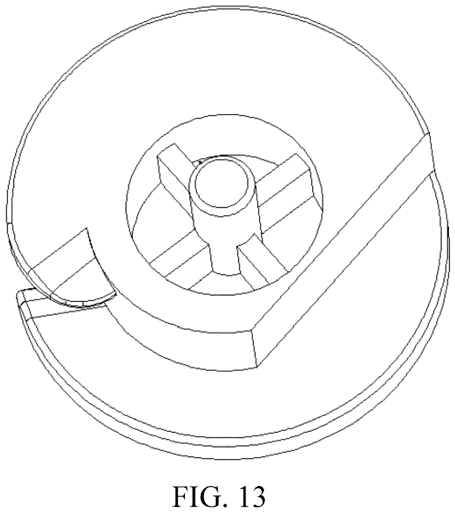

As shown in FIG. 6 and FIG. 8, the inner wall of the housing of the cup discharging device (2) is provided with an annular gear (14), each cup holding protruding portion (11) is a shaft (15) with a gear (as shown in FIG. (10)), the shafts (15) with the gears engage, through the gears, with the annular gear (14) arranged on the inner wall of the housing of the cup discharging device (2), the annular gear is additionally connected to a transmission gear (20), the transmission gear is connected to a motor (21), when the motor rotates, the transmission gear is driven, and the annular gear is driven. As shown in FIG. 10 and FIG. 13, the upper and lower parts of each shaft (15) are provided with a spiral groove separately, and the two spiral grooves are intersected to form a gap.

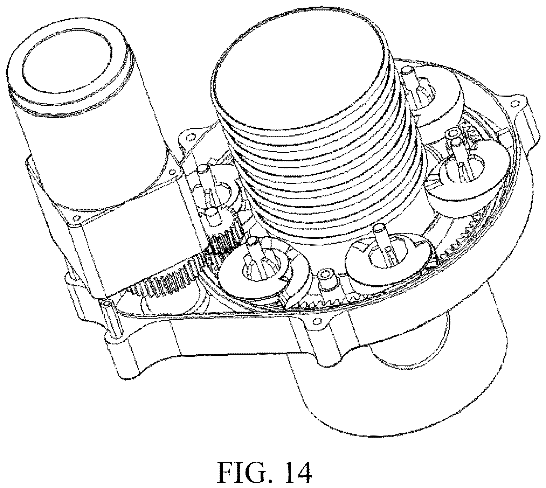

As shown in FIG. 14, the cup discharging device receives a cup, there may be one or more cups stacked together, the cup should include a cup edge of which the diameter is slightly greater than that of a cup body, and when the cup does not fall, the cup edge is held on the shafts. As shown in FIG. 6 and FIG. 8, the automatic cupping device is connected to a controller which may be a single-chip computer, after receiving a cup falling signal (such as a cup falling signal started after a user inserts a coin), the single-chip computer controls the base plate to rotate, the cup aligning device rotates to be under the cup discharging device, and the single-chip computer controls the motor (21) to rotate, so as to drive the transmission gear (20) and to drive the annular gear. Generally, there are more than two shafts (15), which may stably form a plane, the cup is held on the plane, when the plurality of shafts (15) are distributed on the annular gear, an angle difference is formed with respect to the center of circle, and the relative angle difference of the gap on each shaft (15) is identical to the foregoing angle difference, so that after the shafts (15) are driven to rotate by the annular gear, and after the cup edge rotates to the gap along the spiral groove, a plurality of points of the cup edge reaches the gap at the same time, and a cup falls into the cup aligning device.

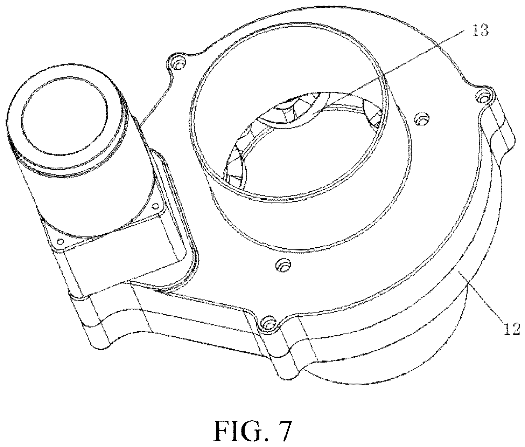

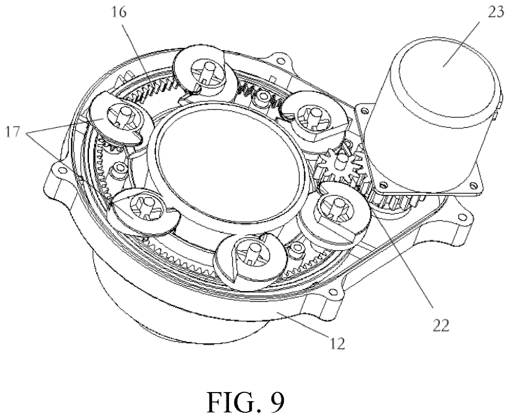

As shown in FIG. 7 and FIG. 9, similar to the cup discharging device, the inner wall of the housing of the cover discharging device (3) is provided with an annular gear (16), each cover holding protruding portion (13) is a shaft (17) with a gear (as shown in FIG. (10)), the shafts (17) with the gears engage, through the gears, with the annular gear (14) arranged on the inner wall of the housing of the cover discharging device (3), the annular gear is additionally connected to a transmission gear (22), the transmission gear is connected to a motor (23), when the motor rotates, the transmission gear is driven, and the annular gear is driven. As shown in FIG. 10 and FIG. 13, the upper and lower parts of each shaft (17) are provided with a spiral groove separately, and the two spiral grooves are intersected to form a gap.

The cover discharging device receives a cover, there may be one cover or more covers stacked together, the cover should include a cover edge of which the diameter is slightly greater than that of the cover, and when the cover does not fall, the cover edge is held on the shafts. The automatic cupping device is provided with a controller which may be a single-chip computer, after receiving a cover falling signal, the single-chip computer controls the base plate to rotate, the cup aligning device rotates to be under the cover discharging device, and the single-chip computer controls the motor (23) to rotate, so as to drive the transmission gear (22) and to drive the annular gear (16). Generally, there are more than two shafts (17), which may stably form a plane, the cover is held on the plane, when the shafts (17) are distributed on the annular gear (16), an angle difference is formed with respect to the center of circle, and the relative angle difference of the gap on each shaft (17) is identical to the foregoing angle difference, so that after the shafts (17) are driven to rotate by the annular gear, the cover edge rotates to the gap along the spiral grooves, a plurality of points of the cover edge reaches the gap at the same time, and a cover falls onto the cup on the cup aligning device.

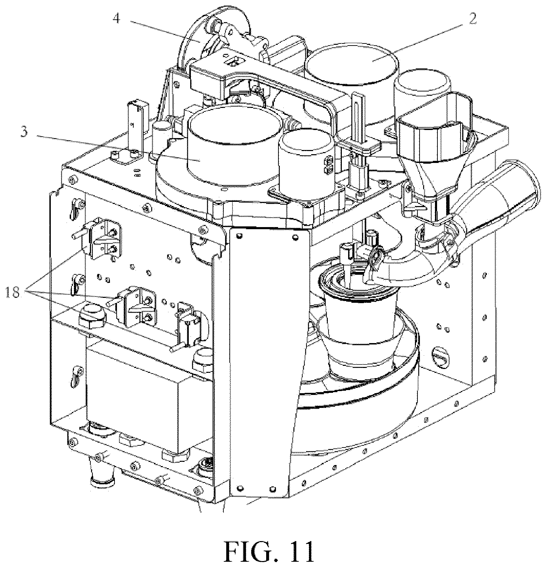

As shown in FIG. 11, the automatic cupping device is provided with a photoelectric sensor (18), and after the controller receives the cup falling signal, the controller controls the photoelectric sensor (18) to send a detection signal to confirm whether a cup falls, and information obtained after detection is returned to the controller.

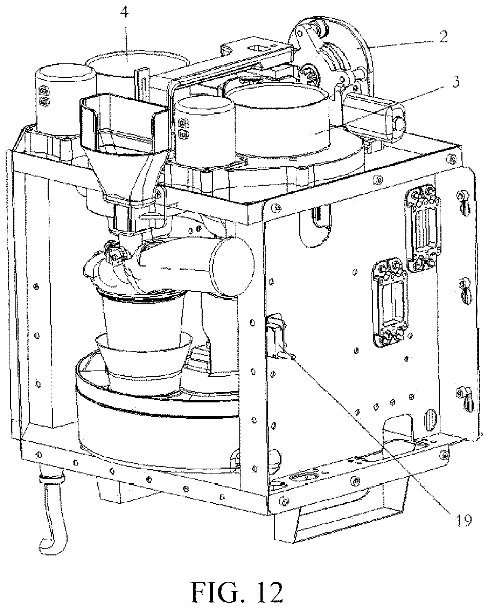

As shown in FIG. 12, the automatic cupping device is provided with a photoelectric sensor (19), and after the controller receives the cover falling signal, the controller controls the photoelectric sensor (18) to send a detection signal to confirm whether a cup cover falls, and information obtained after detection is returned to the controller.

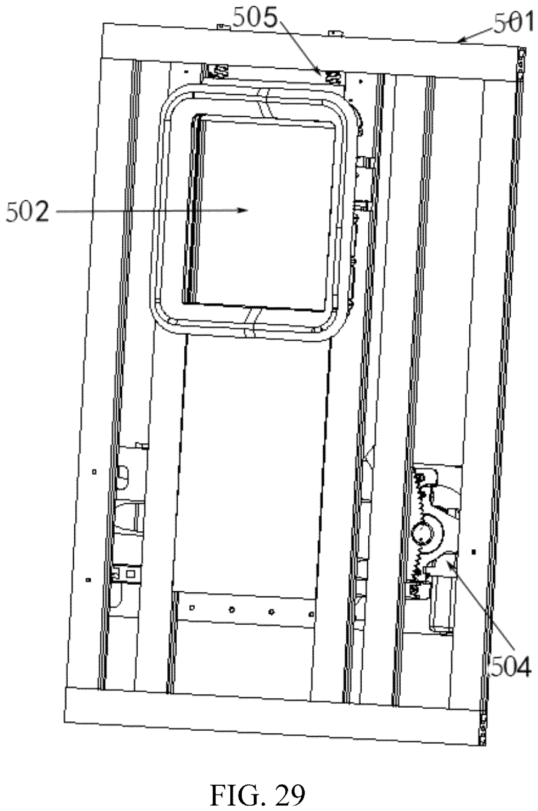

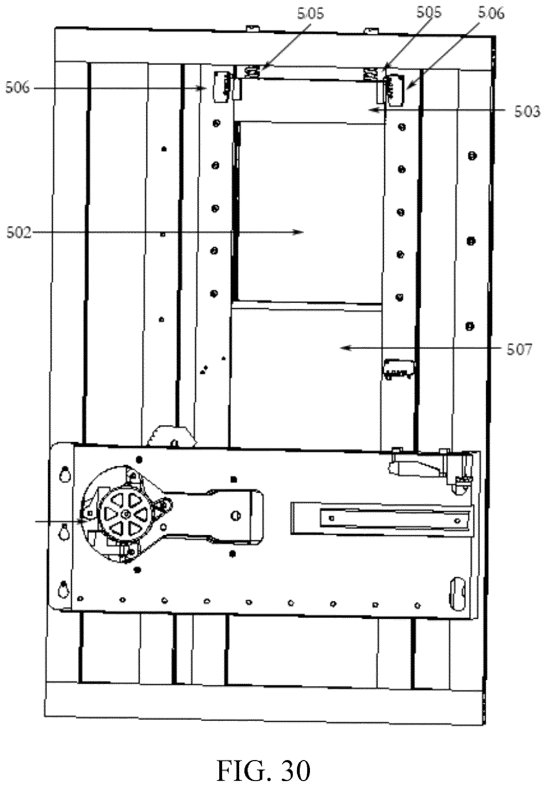

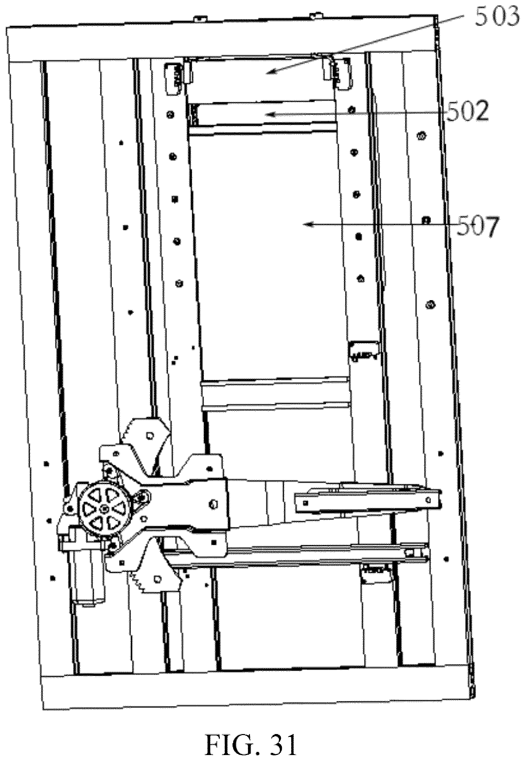

As shown in FIG. 29 to FIG. 31, the door sheet includes a door sheet body (501) and a goods outlet (502), an upper baffle (503) is arranged above the goods outlet (502), a lower baffle (507) is arranged below the goods outlet (502), the door sheet further includes a motor (504), the motor (504) drives, through the transmission rod, the lower baffle (507) to longitudinally move, and the upper baffle (503) is connected to the door sheet body (501) through an elastic device (505).

The top end of the goods outlet (502) is laterally provided with a photoelectric device (506), and the photoelectric device (506) is connected to the motor (504), and can make the motor (504) stop running.

Thus, if a moving door touches a hand when moving up, the moving door will be automatically opened, thereby achieving an anti-pinch function.

In a specific embodiment of the present patent, the juicer conveying device (200) conveys oranges to the juicer juicing device (400), before the juicer juicing device (400) juices the oranges, the motor and the photoelectric sensor of the automatic cupping device (100) are both connected to the controller through a circuit, the controller controls the base plate to drive the cup aligning device to first operate to the cup discharging device (2), a cup falls onto the cup discharging device (2), the photoelectric sensor (18) sends a detection signal to confirm whether the cup falls, then the controller controls the base plate to drive the cup aligning device to be under a juice outlet of the juicer juicing device (400), juicing is controlled by the juicer juice-out control device (300) to make the cup full of fruit juice, then the controller controls the base plate to drive the cup aligning device to the cover discharging device (3), a cover falls onto the cover discharging device (3), the photoelectric sensor (19) sends a detection signal to confirm whether the cover falls, then the controller controls the base plate to drive the cup aligning device to the cover pressing device (4), the motor (9) with the gear drives the gear (8), so as to further drive the cover pressing plate (7) to move up and down, the cover pressing device (4) may be provided with a limiting switch (24), so as to control the motion amplitude of the cover pressing plate (7), and when the cover pressing plate (7) moves to tightly cover the cup with the cup cover, the cover pressing plate stops. Then, the controller controls the base plate to drive the cup aligning device to an opening. At this moment, the cup full of the fruit juice and already tightly covered with the cover can be taken away. When the cup is taken away, in the presence of an anti-pinch door sheet (500), the user is safer.

The content is only basic description under the concept of the present invention, and any equivalent changes made according to the technical solution of the present invention should fall within the scope of protection of the present invention.

## Claims

1. A juicer, comprising a juicer conveying device (200), a juicer juice-out control device (300), a juicer automatic cupping device (100), a juicer juicing device (400), and an anti-pinch door sheet (500), wherein
the juicer conveying device (200) conveys a material to the juicer juicing device (400), the juicer juicing device (400) juices the material, and then juice enters the juicer juice-out control device (300), the juicer juice-out control device (300) controls the outflow volume of the juice, the controlled juice enters the juicer automatic cupping device (100), the juicer automatic cupping device (100) automatically cups the juice, and after cupping, a cup can be taken away through the anti-pinch door sheet (500), and the juicer being **characterized in that**:
A. the juicer conveying device (200) comprises a conveying basket (201) and a conveying chain (202), the conveying basket (201) is connected to the conveying chain (202), a motor drives a transmission gear, so as to drive the conveying chain (202) to rotate,
the conveying device further comprises a lower tray (204), a transmission belt is arranged on a bottom surface of the lower tray, and
the conveying device further comprises an upper tray (203), the upper tray (203) is higher than the lower tray (204), the upper tray comprises a bottom surface and a fence (206) connected to the bottom surface, a transmission belt (207) is also arranged on the bottom surface of the upper tray, the fence is provided with an opening, and a receiving groove (205) is provided on one side of the lower tray;
B. the juicer juice-out control device (300) comprises a funnel (301), a juice storage tube (302), a connecting piece (303), and a guide tube (309), the guide tube (309) is connected to the bottom of the funnel (301), one end of the juice storage tube (302) is closed, the other end is provided with an opening (304), the upper part of the middle of the juice storage tube is additionally provided with an opening (305), the bottom of the guide tube (309) is located in the opening at the upper part of the middle of the juice storage tube, the bottom of the guide tube (309) is provided with two protruding portions (306), the connecting piece tightly circles around the bottom of the juice storage tube, both ends are separately provided with an opening sleeving the corresponding protruding portion at the bottom of the guide tube (309), and the connecting piece can rotate around the two protruding portions,
the juice-out control device further comprises a single-point liquid probe (307), the single-point liquid probe (307) is fixed to a transmission rod (308), the transmission rod is connected to the upper part of the opening end of the juice storage tube, the transmission rod is connected to a motor, the motor moves to be capable of driving the transmission rod to move up and down and driving the juice storage tube to rotate around the protruding portions at the bottom of the guide tube (309), the juicer further comprises a controller,
the single-point probe is connected to the controller, when the liquid probe probes liquid, an uplift signal is sent to the controller, and the controller controls the transmission rod to move up, so as to drive the end, with the opening, of the juice storage tube to be uplifted to be higher than the closed end;
C. the juicer automatic cupping device (100) comprises a base plate (1), a cup discharging device (2), a cover discharging device (3), and a cover pressing device (4), the cup discharging device (2), the cover discharging device (3) and the cover pressing device (4) are higher than the base plate, the base plate (1) is connected to a motor (5), the motor (5) rotates to be capable of driving the base plate (1) to rotate around the center of circle,
a cup aligning device (6) is arranged on the base plate (1), the bottom diameter of the aligning device (6) is greater than the cup bottom diameter of a to-be-filled cup,
the cup discharging device (2) comprises a housing (10), an inner wall of the housing (10) is provided with more than two cup holding protruding portions (11), a vertical distance between the cup holding protruding portions (11) and the base plate (1) is greater than the height of the to-be-filled cup,
the cover discharging device (3) comprises a housing (12), an inner wall of the housing (12) is provided with more than two cover holding protruding portions (13), a vertical distance between the cover holding protruding portions (13) and the base plate (1) is greater than the height of the to-be-filled cup,
the cover pressing device comprises a cover pressing plate (7), a rack (8), and a motor (9) with a gear, the rack (8) is meshed with the gear of the motor (9), the rack (8) drives the cover pressing plate to move up and down, and
when the base plate rotates, the cup aligning device (6) can be located right below the cup discharging device (2), the cover discharging device (3) and the cover pressing device (4);
D. the anti-pinch door sheet (500) comprises a door sheet body (501) and a goods outlet (502), an upper baffle (503) is arranged above the goods outlet (502), a lower baffle (507) is arranged below the goods outlet (502), the door sheet further comprises a motor (504), the motor (504) drives, through the transmission rod, the lower baffle (507) to longitudinally move, the upper baffle (503) is connected to the door sheet body (501) through an elastic device (505),
the top end of the goods outlet (502) is laterally provided with two limiting devices (506), and a photoelectric device (506) is connected to the motor (504), and can make the motor (504) stop running.

2. The juicer of claim 1, **characterized in that** the inner wall of the housing of the cup discharging device (2) of the automatic cupping device (100) is provided with a gear (14), each cup holding protruding portion (11) is a shaft (15) with a gear, the upper and lower parts of each shaft (15) are provided with a spiral groove separately, and the two spiral grooves are intersected to form a gap.

3. The juicer of claim 1, **characterized in that** the inner wall of the housing of the cover discharging device (3) of the automatic cupping device (100) is provided with a gear (16), each cover holding protruding portion (13) is a shaft (17) with a gear, the upper and lower parts of each shaft (17) are provided with a spiral groove separately, and the two spiral grooves are intersected to form a gap.

4. The juicer of claim 2, **characterized in that** the automatic cupping device (100) is connected to the controller, after receiving a cup falling signal, the controller controls the base plate to rotate, the cup aligning device (6) rotates to be under the cup discharging device (2), the shafts (15) with the gears rotate, a cup edge of the to-be-filled cup rotationally falls to the gap along the spiral grooves, and the to-be-filled cup falls into the cup aligning device (6).

5. The juicer of claim 3, **characterized in that** the automatic cupping device (100) is connected to the controller, after receiving a cover falling signal, the controller controls the base plate to rotate, the cup aligning device (6) rotates to be under the cover discharging device (3), the shafts (17) with the gears rotate, a cover edge of a to-be-filled cup cover rotationally falls to the gap along the spiral grooves, and the to-be-filled cup cover falls onto the to-be-filled cup.

6. The automatic cupping device of the juicer of claim 4 or 5, **characterized in that** the automatic cupping device (100) is provided with a photoelectric sensor (18), and after receiving the cup falling signal, the controller controls the photoelectric sensor (18) to send a detection signal to confirm whether a cup falls;
the automatic cupping device is provided with a photoelectric sensor (19), and after the cover falling signal, the controller controls the photoelectric sensor (19) to send a detection signal to confirm whether a cup cover falls.

7. The juicer of any one of claims 1 to 5, **characterized in that** the juicer conveying device (200) comprises a controller and a photoelectric sensor (211), after the controller receives a material conveying signal, the motor is started, the motor drives the transmission belts of the upper tray (203) and the lower tray (204), the material enters the lower tray (204) from the opening of the fence of the upper tray, the photoelectric sensor (211) sends a signal to the controller, and the transmission belt of the upper tray (203) stops moving; and the material enters the receiving groove (205) from the lower tray, after the material enters the receiving groove (205), the photoelectric sensor (211) sends a signal to the controller, and the transmission belt of the lower tray (204) stops moving.

8. The juicer of claim 7, **characterized in that** a photoelectric sensor (211) is mounted in the upper tray (203), the photoelectric sensor (211) scans the upper tray (203) periodically, if the photoelectric sensor cannot scan the material, the photoelectric sensor sends a signal to the controller, after the controller receives the signal of the photoelectric sensor (211), the conveying basket (201) is driven to the top end of the conveying device by the chain (202), the top end of the juicer conveying device is provided with a blocking component (209), one side of the conveying basket (201) is blocked, the conveying basket is rotated and overturned, and the material in the conveying basket enters the upper tray (203); and the photoelectric sensor (211) and a limiter (210) are arranged on a machine frame of the conveying device (200), and when scanning the conveying basket (21) to find out that there is no material, the photoelectric sensor (211) transmits a signal to the controller through the limiter (210).

9. The juicer of claims 1 to 5, wherein the juice-out control device (300) is connected to the controller, the controller can receive a lowering signal, and the controller controls the transmission rod to move down, so as to drive the end, with the opening, of the juice storage tube (302) to be lowered to be lower than the closed end.

10. The juicer of claim 9, wherein there are two single-point liquid probes (307) of the juicer juice-out control device (300), which are located in the same vertical height, and when the two single-point probes (307) are immersed into liquid at the same time, a closed loop is formed.
